# EUROPEAN PATENT APPLICATION

(11) **EP 4 822 150 A1**
(43) Date of publication of application: **14.10.2026**
(21) Application number: 26170937.2
(22) Date of filing: 07.04.2026
(51) Int. Cl.: F01N 3/20, F01N 9/00

(54) **AFTERTREATMENT TEMPERATURE MANAGEMENT DURING A BRAKING EVENT**

(30) Priority: 09.04.2025 US 202563786254 P
(71) Applicant: Cummins Inc., Columbus, IN 47201 (US)
(72) Inventor: WALKER, Jeremy, Columbus, 47201 (US); SONG, Xiaobo, Columbus, 47201 (US)
(74) Representative: Cleveland Scott York

(57) **Abstract**

A system includes a controller communicably coupled to an engine. The controller is configured to perform operations comprising receiving a temperature value regarding an aftertreatment system; receiving a regeneration power value regarding a braking event; comparing the temperature value to a temperature threshold. Responsive to the temperature value being above the temperature threshold and the regeneration power value being at or above a first power threshold, the controller is configured to cause one or more electric machines to rotate the engine during the braking event. Responsive to the temperature value being below the temperature threshold and the regeneration power value being at or above a second power threshold, the controller is configured to cause the one or more electric machines to rotate the engine, and activate a heater associated with the aftertreatment system to heat the aftertreatment system during the braking event.

## Description

### CROSS-REFERENCE TO RELATED PATENT APPLICATION

This application claims the benefit of and priority to U.S. provisional Patent Application No. 63/786254, filed April 9, 2025, which is incorporated herein by reference in its entirety and for all purposes.

### TECHNICAL FIELD

The present disclosure relates to aftertreatment temperature management during a braking event for a vehicle.

### BACKGROUND

An internal combustion engine consumes fuel, such as gasoline, diesel, hydrogen, natural gas, etc., to produce power (e.g., for turning a crankshaft of a system embodying the engine, such as a vehicle). In hybrid powertrain systems, an electric machine may consume electricity to produce power (e.g., for turning a crankshaft of a system embodying the engine, such as a vehicle). In either powertrain configuration, the system may additionally include an aftertreatment system intended to reduce potentially harmful emissions (e.g., Nitrogen oxides (NOx), etc.) to less harmful emissions (e.g., NOx to nitrogen and water). Aftertreatment systems may require certain operating conditions to operate as intended.

### SUMMARY

One embodiment relates to a system. The system includes a controller communicably coupled to an engine of the system. The controller includes at least one processor coupled to at least one memory device storing instructions that, when executed by the at least one processor, cause the controller to perform operations. The operations include: receiving a temperature value regarding an aftertreatment system; receiving a regeneration power value regarding a braking event; comparing the temperature value to a temperature threshold; responsive to the temperature value being above the temperature threshold and the regeneration power value being at or above a first power threshold, causing one or more electric machines to rotate the engine during the braking event; and responsive to the temperature value being below the temperature threshold and the regeneration power value being at or above a second power threshold: causing the one or more electric machines to rotate the engine, and activating a heater associated with the aftertreatment system to heat the aftertreatment system during the braking event.

Another embodiment relates to a method. The method includes: receiving, by a controller, a temperature value regarding an aftertreatment system; receiving, by the controller, a regeneration power value regarding a braking event; comparing, by the controller, the temperature value to a temperature threshold; responsive to the temperature value being above the temperature threshold and the regeneration power value being at or above a first power threshold, causing, by the controller, one or more electric machines to rotate an engine during the braking event; and responsive to the temperature value being below the temperature threshold and the regeneration power value being at or above a second power threshold: causing, by the controller, the one or more electric machines to rotate the engine, and activating, by the controller, a heater associated.

Yet another embodiment relates to a non-transitory computer-readable media storing instructions that, when executed by one or more processors of a controller, cause the one or more processors to perform operations. The operations include: receiving a temperature value regarding an aftertreatment system; receiving a regeneration power value regarding a braking event; comparing the temperature value to a temperature threshold; responsive to the temperature value being above the temperature threshold and the regeneration power value being at or above a first power threshold, causing one or more electric machines to rotate an engine during the braking event; and responsive to the temperature value being below the temperature threshold and the regeneration power value being at or above a second power threshold: causing the one or more electric machines to rotate the engine, and activating a heater associated with the aftertreatment system to heat the aftertreatment system during the braking event.

Numerous specific details are provided to impart a thorough understanding of embodiments of the subject matter of the present disclosure. The described features of the subject matter of the present disclosure may be combined in any suitable manner in one or more embodiments and/or implementations. In this regard, one or more features of an aspect of the invention may be combined with one or more features of a different aspect of the invention. Moreover, additional features may be recognized in certain embodiments and/or implementations that may not be present in all embodiments or implementations.

### BRIEF DESCRIPTION OF THE DRAWINGS

FIG. 1 is a block diagram of a system including an internal combustion engine and an electric machine, shown in a series hybrid configuration, according to an example embodiment.
FIG. 2 is a block diagram of the system of FIG. 1 shown in a parallel hybrid configuration, according to an example embodiment.
FIG. 3 is a block diagram of the system of FIG. 1 shown in a series-parallel hybrid configuration, according to an example embodiment.
FIG. 4 is a block diagram of a controller of the system of FIG. 1, according to an example embodiment.
FIG. 5 is a flow diagram of a method of controlling the system of FIG. 1, according to an example embodiment.

### DETAILED DESCRIPTION

Following below are more detailed descriptions of various concepts related to, and implementations of methods, apparatuses, computer-readable media, and systems for controlling exhaust aftertreatment system temperatures during or in response to certain system operating conditions, such as braking events. Before turning to the Figures, which illustrate certain exemplary embodiments in detail, it should be understood that the present disclosure is not limited to the details or methodology set forth in the description or illustrated in the Figures. It should also be understood that the terminology used herein is for the purpose of description only and should not be regarded as limiting.

As described herein, an engine or powertrain system may include an engine coupled and particularly fluidly coupled to an exhaust aftertreatment system such that the exhaust aftertreatment system is in exhaust gas receiving communication with the engine. In some embodiments, the powertrain system is or is a part of a hybrid engine system having both an internal combustion engine and at least one electric machine. As described herein, the powertrain system may be configured as a series hybrid powertrain, a series-parallel hybrid powertrain, or any dual hybrid powertrain that allows a series hybrid mode. In any of these embodiments, the powertrain system may be part of a vehicle or vehicle system (e.g., the vehicle system embodies the powertrain system). During operation of the vehicle system, the powertrain system provides mechanical power to propel the vehicle system (e.g., by rotating one or more final drives, such as wheels, of the vehicle system). It may be desirable to stop or slow down the vehicle system while the vehicle system is in motion. Thus, one or more braking mechanisms may be implemented to stop or slow down the vehicle system, such as engine braking (including a compression brake, exhaust brake, or both), regenerative braking, friction braking, etc.

In an example embodiment, a control system or controller receives a temperature value regarding the aftertreatment system and a regeneration power value regarding one or more electric machines of the system. The control system or controller compares the temperature value to a temperature threshold. Responsive to the temperature value being above the temperature threshold and the regeneration power value being at or above a first power threshold, the control system or controller causes the one or more electric machines to rotate the engine to cool the aftertreatment system. Responsive to the temperature value being below the temperature threshold and the regeneration power value being at or above a second power threshold, the controller 140 causes the one or more electric machines to rotate the engine and activates the heater associated with the aftertreatment system to heat the aftertreatment system. In some cases, an amount of power generated via regenerative braking is above a battery power limit (e.g., an amount of power an energy storage system can receive). In these cases, the engine can be rotated by one or more electric machines to consume the excess regenerative braking power (e.g., the regenerative braking power that is at or above the battery power limit) to avoid exceeding the battery power limit. In some embodiments, an aftertreatment heater may be used to mitigate cooling of the aftertreatment system by the motored engine.

Technically and beneficially, the systems, computer-readable media, methods, and apparatuses described herein provide improved thermal management for at least the exhaust aftertreatment system by automatically or substantially automatically managing and/or controlling aftertreatment system temperatures during a predefined operation for the system, such as a braking event. In one example embodiment, the systems, methods, and computer-readable media described herein advantageously utilize a particular control strategy to mitigate heat loss in the aftertreatment system during a brake event. That is, the systems, computer-readable media, and methods described herein provide a technical solution to the technical problem of heat loss during a braking event caused by reduced exhaust gas temperatures during the braking event. More specifically, the technical problem is reduced catalytic activity caused by lower than desired aftertreatment system temperatures resulting from engine braking. The technical solution includes a particular computer-based process that mitigates heat loss in the aftertreatment system caused by the engine braking, thereby improving (e.g., increasing) or mitigating a loss in the catalytic activity in the aftertreatment system. By way of example, the particular control strategy may include activating or increasing a heat output by a heater (e.g., an electric heater) in the aftertreatment system to heat the aftertreatment system. By way of another example, the particular control strategy may include operating a bypass valve that is configured to direct air, which is relatively cooler than the aftertreatment system, away from the aftertreatment system to mitigate heat loss in the aftertreatment system.

As described above, in some embodiments, the controller or control system may heat the aftertreatment system and/or mitigate heat loss in the aftertreatment system. In other embodiments, because temperatures above a desired threshold can result in reduced catalytic activity, the controller or control system may cool the aftertreatment system to or below the desired threshold. In an example embodiment, the systems, methods, and computer-readable media described herein advantageously utilize a particular control strategy to impart further heat loss in the aftertreatment system during a brake event, and, in particular, an engine braking process. That is, the systems, computer-readable media, and methods described herein provide a technical solution to the technical problem of reduced catalytic activity caused by higher than desired aftertreatment system temperatures due to transient engine conditions, engine load conditions, or other operating conditions of the engine that result in the aftertreatment system temperature being higher than desired. The technical solution includes a particular computer-based process that utilizes an engine braking process as an opportunity to cool the aftertreatment system. More specifically, because engine braking results in heat loss in the aftertreatment system, the particular control strategy includes furthering the impact of engine braking on heat loss. By way of example, the control strategy includes causing the electric machine to rotate or "spin" the engine to allow additional air (e.g., ambient air) to flow through the engine 102 and into the aftertreatment system 120. Because the ambient air is cooler than the aftertreatment system, the ambient air cools the aftertreatment system (e.g., to or below the desired temperature value). These and other features and benefits are described more fully herein below.

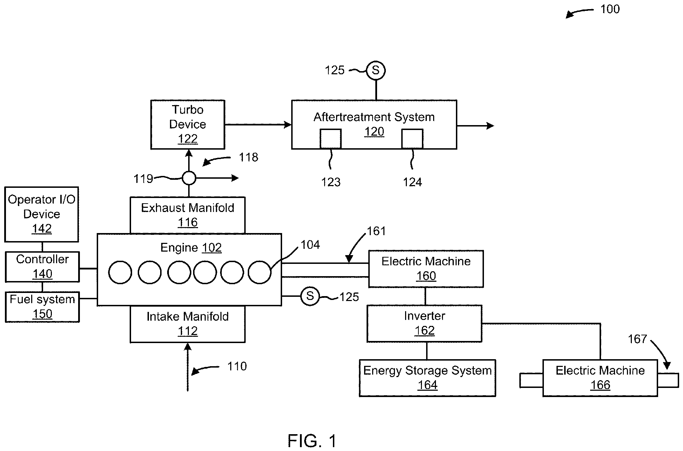

Referring now to FIGS. 1-3, schematic views of block diagrams of a system 100 are shown, according to various example embodiments. The system 100 includes an engine 102 and an aftertreatment system 120 in exhaust gas receiving communication with the engine 102. The system 100 includes a controller 140 and an operator input/output (I/O) device 130, where the controller 140 is communicably coupled to each of the aforementioned components.

In some embodiments, the system 100 includes a turbo device 122 disposed between the engine 102 and the aftertreatment system 120, such that the turbo device 122 is in exhaust gas receiving communication with the engine 102 and exhaust gas providing communication with the aftertreatment system 120. In these embodiments, the aftertreatment system 120 is in exhaust gas receiving communication with the engine 102 (e.g., via the turbo device 122).

In some embodiments, the system 100 is included in a vehicle. The vehicle may be any type of on-road or off-road vehicle including, but not limited to, wheel-loaders, fork-lift trucks, line-haul trucks, mid-range trucks (e.g., pick-up truck, etc.), sedans, coupes, tanks, airplanes, boats, and any other type of vehicle suitable for the innovations described herein. In other embodiments, the system 100 may be embodied in a stationary piece of equipment, such as a power generator or genset. All such variations are intended to fall within the scope of the present disclosure.

In the configuration shown in FIGS. 1-3, the engine 102 is an internal combustion engine (ICE). The engine 102 may consume fuel (e.g., gasoline, diesel, hydrogen, natural gas, etc.) to generate power. The engine 102 includes one or more cylinders 104 (e.g., combustion cylinders). The cylinders 104 enable combustion of the fuel within the engine 102. Combustion of fuel causes the engine 102 to rotate (e.g., a crankshaft, a camshaft, etc.), and the rotation of the engine may be used to provide mechanical power to a downstream component, system, or subsystem, such as a shaft, an electric machine, and/or one or more wheels of a vehicle embodying the system 100.

As shown in FIG. 1, the engine 102 includes six cylinders 104. However, it should be understood that the engine 102 may include more or fewer cylinders 104 (e.g., at least one) than as shown in FIG. 1. Furthermore, the cylinders 104 may be provided in varying arrangements (e.g., in-line, horizontal, V, or other suitable cylinder arrangement).

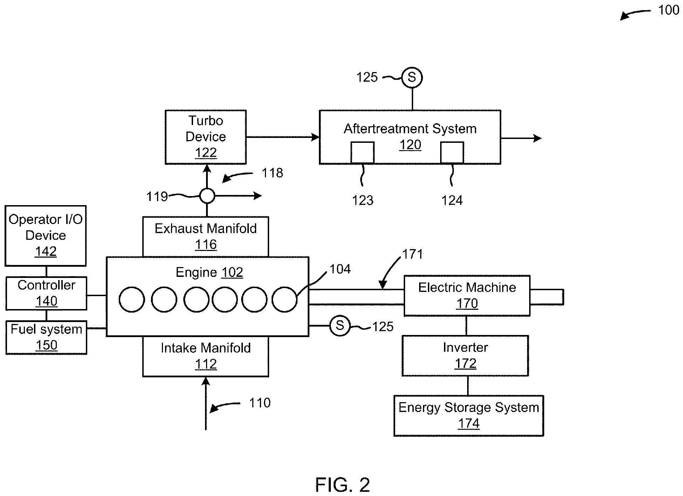

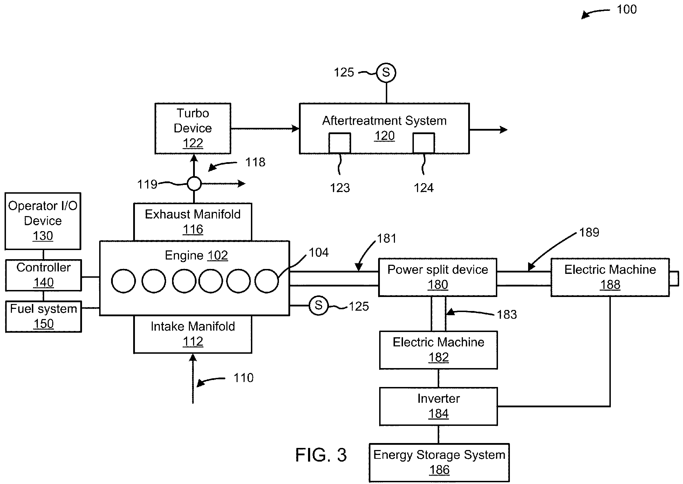

In some embodiments and as shown, the engine 102 may be part of a hybrid engine system having a combination of an internal combustion engine and at least one electric machine, shown as a first electric machine 160 and a second electric machine 166 in FIG. 1, a third electric machine 170 in FIG. 2, and a fourth electric machine 182 and a fifth electric machine 188 in FIG. 3, coupled to at least one energy storage system, shown as a first energy storage system 164 in FIG. 1, a second energy storage system 174 in FIG. 2, and a third energy storage system 186 in FIG. 3.

In various embodiments described herein, an electric machine (e.g., the first electric machine 160, the second electric machine 166, the third electric machine 170, the fourth electric machine 182, and/or the fifth electric machine 188) may be configured as a motor, a motor generator, an electric starter, an eAxle, a through-the-road (TTR) electric machine, an in-wheel motor (IWM), or other type of electric machine. Further, multiple electric machines may be included in the system in some embodiments. The electric machine may be of different structures (e.g., a motor and a motor generator) in various embodiments.

In some embodiments, the electric machine may be configured to use power (e.g., electrical power from an energy storage system) to output power, such as electrical and/or mechanical power. In some embodiments, the electric machine may output mechanical power that at least partially causes the vehicle that embodies the system to move. In some additional embodiments, the electric machine may be rotated (e.g., a rotator of the electric machine may be rotated by the engine 102 or another force, such as during a regenerative braking process whereby energy captured from braking causes the electric machine to rotate) such that the electric machine generates power (e.g., electrical power). The electric machine may provide the generated electrical power to the energy storage system (e.g., the first energy storage system 164, the second energy storage system 174, or the third energy storage system 186). In other words, the electric machine may capture electrical energy that is provided to one or more components (e.g., an energy storage system) during braking, which is known as regenerative braking. During regenerative braking, the slowing of the electric machine rotates the rotatable component (e.g., rotor) of the electric machine that causes generation of a magnetic field and the output of electrical power. The captured electrical power may be used for various operations, such as the powering of electrically-powered accessories (e.g., an aftertreatment system heater).

The at least one energy storage system (e.g., the first energy storage system 164, the second energy storage system 174, or the third energy storage system 186) is configured to store electrical energy and to selectively provide the stored electrical energy. For example, the energy storage system may be or include one or more batteries (e.g., battery cells, etc.), capacitors, supercapacitors, and/or other electrical energy storage devices.

In the embodiment shown in FIG. 1, the system 100 is configured as a series powertrain including the engine 102, the first electric machine 160, the second electric machine 166, and the first energy storage system 164. The system 100 may also include a first shaft 161 (e.g., an output shaft, a drive shaft, a crankshaft, etc.) that couples the engine 102 to the first electric machine 160. That is, the first electric machine 160 is coupled to the engine 102 via the first shaft 161. In some embodiments, the first electric machine 160 is coupled to the engine 102 via first shaft 161 and one or more additional components, such as a transmission, one or more gears, a gearbox, or other suitable components. The first electric machine 160 is configured to receive power (e.g., mechanical power) from the engine 102 (e.g., via the first shaft 161). That is, the first shaft 161 is configured to transfer mechanical power from the engine 102 to the first electric machine 160.

The system 100 may also include an inverter 162 (e.g., an alternator, etc.) that is configured to convert electrical power from an alternating current, which, for example, may be generated by the first electric machine 160, to a direct current, which, for example, may be used to charge the energy storage system 164, and vice versa. The inverter 162 couples the first electric machine 160 to the first energy storage system 164. In this way, the first electric machine 160 provides electrical power to the first energy storage system 164 via the inverter 162. The inverter 162 also couples the first electric machine 160 to the second electric machine 166. The first electric machine 160 provides electrical power to the second electric machine 166 via the inverter 162. The inverter 162 also couples the first energy storage system 164 to the second electric machine 166, such that the first energy storage system 164 provides electrical power to the second electric machine 166 via the inverter 162 (e.g., when the second electric machine 166 is propelling the vehicle) and vice versa (e.g., during a regenerative braking process).

The system 100 may also include a second shaft 167 (e.g., an output shaft, a drive shaft, a final drive, etc.) that couples the second electric machine 166 to an output, such as the wheels of a vehicle embodying the system 100. In some embodiments, the second electric machine 166 is coupled to the output by the second shaft 167 and one or more additional components (e.g., a transmission, one or more gears, a gearbox, a differential, one or more clutches, etc.). In the embodiment shown in FIG. 1, the second shaft 167 is a drive shaft or output shaft that is coupled to the wheels. In other embodiments, the second shaft 167 may be coupled to an output shaft (e.g., a drive shaft, final drive, etc.), and the second shaft 167 is configured to provide power (e.g., mechanical power) to the output shaft. In any of these embodiments, the second electric machine 166 is configured to provide power (e.g., mechanical power) to the wheels (e.g., via the second shaft 167). That is, the second shaft 167 is configured to transfer mechanical power from the second electric machine 166 to the wheels.

In an example implementation of a series powertrain, the engine drives 102 the first electric machine 160 (which is configured as an electric generator). The first electric machine 160 generates electrical power. The electrical power generated by the first electric machine 160 is used to charge the first energy storage system 164 and/or to power the second electric machine 166 (which is configured as an electric motor). The second electric machine 166 receives electrical power from the first electric machine 160 and/or the first energy storage system 164 and uses the received electrical power to drives the wheels of the vehicle (e.g., via the second shaft 167 and/or one or more additional components, as described above). The second electric machine 166 may also generate electrical power (e.g., during a regenerative braking process) that can be used to charge the first energy storage system 164. In this way, both the first electric machine 160 and the second electric machine 166 can be used to charge the first energy storage system 164 (e.g., via the engine 102 and the regenerative braking process, respectively).

In the embodiment shown in FIG. 2, the system 100 is configured as a parallel powertrain including the engine 102, the third electric machine 170, and the second energy storage system 174. The system 100 may also include a shaft 171 (e.g., an output shaft, a drive shaft, a crankshaft, etc.) that couples the engine 102, the third electric machine 170, and an output, such as the wheels of a vehicle embodying the system 100. That is, the third electric machine 170 is coupled to the engine 102 via the shaft 171, and both the third electric machine 170 and the engine 102 are coupled to the output via the shaft 171. In some embodiments, the engine is coupled to the third electric machine 170 via the shaft 171 and one or more additional components (e.g., a transmission, one or more gears, a gearbox, a differential, one or more clutches, etc.). In some embodiments, both the third electric machine 170 and the engine 102 are coupled to the output via the shaft 171 and one or more additional components (e.g., a transmission, one or more gears, a gearbox, a differential, one or more clutches, etc.). In this way, the shaft 171 may facilitate transferring power from the engine 102 to the output, from the third electric machine 170 to the output, and/or from the third electric machine 170 to the engine 102. The shaft 171 is also coupled to the wheels of a vehicle embodying the system 100, such that rotation of the shaft 171 propels the vehicle. In the embodiment shown in FIG. 2, the shaft 171 is a drive shaft or output shaft that is coupled to the wheels. In other embodiments, the shaft 171 may be coupled to an output shaft (e.g., a drive shaft, final drive, etc.), and the shaft 171 is configured to provide power (e.g., mechanical power) to the output shaft. In any of these embodiments, because the shaft 171 is coupled to both the engine 102 and the third electric machine 170, the engine 102 and the third electric machine 170 may propel the vehicle. For example, the engine 102 and the third electric machine 170 may rotate the shaft 171 independently (e.g., one at a time) or at least partially concurrently. Said another way, the shaft 171 is configured to transfer mechanical power from the engine 102, the third electric machine 170, or both to the wheels.

The system 100 may also include an inverter 172 (e.g., an alternator, etc.) that is configured to convert electrical power from an alternating current, which, for example, may be generated by the third electric machine 170, to a direct current, which, for example, may be used to charge the second energy storage system 174, and vice versa. The inverter 172 couples the third electric machine 170 to the second energy storage system 174. In this way, the third electric machine 170 provides electrical power to the second energy storage system 174 via the inverter 172 (e.g., during a regenerative braking process). Additionally, the second energy storage system 174 may provide electrical power to the third electric machine 170, such that the third electric machine 170 can consume the electrical power to generate mechanical power to propel the vehicle embodying the system 100.

In an example implementation of a parallel powertrain, both the engine 102 and the third electric machine 170 (which may be configured as an electric motor) are coupled to the shaft 171. The engine 102 and the third electric machine 170 supply power to the wheels (e.g., via the shaft 171) switching back and forth based on driving conditions, power demand, etc. The energy storage system 174 is charged by the third electric machine 170 during regenerative braking process(es).

In the embodiment shown in FIG. 3, the system 100 is configured as a series-parallel powertrain including the engine 102, a power split device 180, the fourth electric machine 182, the fifth electric machine 188, and the third energy storage system 186. The system 100 may also include a first shaft 181 (e.g., an output shaft, a drive shaft, a crankshaft, etc.) that couples the engine 102 to the power split device 180, a second shaft 183 (e.g., an output shaft, a drive shaft, etc.) that couples the power split device 180 to the fourth electric machine 182, and a third shaft 189 (e.g., an output shaft, a drive shaft, etc.) that couples the power split device 180 to the fifth electric machine 188 and/or an output, such as the wheels of a vehicle embodying the system 100. In some embodiments, the engine 102 is coupled to the power split device 180 via the shaft 181 and one or more additional components (e.g., a transmission, one or more gears, a gearbox, a differential, one or more clutches, etc.). In some embodiments, the engine 102 is coupled to the output via the power split device 180, the third shaft 189, and one or more additional components (e.g., a transmission, one or more gears, a gearbox, a differential, one or more clutches, etc.). In some embodiments, the fifth electric machine 188 is coupled to the output via the third shaft 189 and one or more additional components (e.g., a transmission, one or more gears, a gearbox, a differential, one or more clutches, etc.). In the embodiment shown in FIG. 3, the third shaft 189 is a drive shaft or output shaft that is coupled to the wheels. In other embodiments, the third shaft 189 may be coupled to an output shaft (e.g., a drive shaft, final drive, etc.), and the third shaft 189 is configured to provide power (e.g., mechanical power) to the output shaft. In any of these embodiments, because the engine 102 and the fifth electric machine 188 are coupled to the third shaft 189, the engine 102 and the fifth electric machine 188 (separately or at least partially concurrently) are configured to provide power (e.g., mechanical power) to the wheels (e.g., via the third shaft 189). That is, the third shaft 189 is configured to transfer mechanical power from the engine 102, the fifth electric machine 188, or both to the wheels.

The power split device 180 is or includes one or more gears, shafts, or other suitable components for transferring mechanical power. The power split device 180 is configured to selectively transfer mechanical power from the engine 102 to the fourth electric machine 182 and/or from the engine 102 to the output (e.g., the wheels). In some embodiments, the power split device 180 may also enable transferring mechanical power from the fifth electric machine 188 to the engine 102 and/or from the fourth electric machine 182 to the engine 102.

By way of example, the power split device 180 may include a gear switching mechanism, a gearbox, a transmission, or other suitable components for selectively coupling the first shaft 181 to the second shaft 183 (e.g., to facilitate transferring power from the engine 102 to the fourth electric machine 182 or vice versa) or selectively coupling the first shaft 181 to the third shaft 189 (e.g., to facilitate transferring power from the engine 102 to the output or to facilitate transferring power from the fifth electric machine to the engine 102).

The system 100 may also include an inverter 184 (e.g., an alternator, etc.) that is configured to convert electrical power from an alternating current, which, for example, may be generated by the fourth electric machine 182, to a direct current, which, for example, may be used to charge the energy storage system 186, and vice versa. The inverter 184 couples the fourth electric machine 182 to the third energy storage system 186. In this way, the fourth electric machine 182 provides electrical power to the third energy storage system 186 via the inverter 184. The inverter 162 also couples the fourth electric machine 182 to the fifth electric machine 188. The fourth electric machine 182 provides electrical power to the fifth electric machine 188 via the inverter 184. The inverter 184 also couples the third energy storage system 186 to the fifth electric machine 188, such that the third energy storage system 186 provides electrical power to the fifth electric machine 188 via the inverter 184 (e.g., when the fifth electric machine 188 is propelling the vehicle) and vice versa (e.g., during a regenerative braking process).

In a first example scenario, the engine 102 provides power to an output (e.g., to the wheels of the vehicle embodying the system 100) via the power split device 180. For example, the power split device 180 couples the first shaft 181 to the third shaft 189 such that mechanical power is transferred from the engine 102 to the output via the first shaft 181, the power split device 180, and the third shaft 189.

In a second example scenario, the engine 102 provides power to the fourth electric machine 182 via the power split device 180. For example, the power split device 180 couples the first shaft 181 to the second shaft 183 such that mechanical power is transferred from the engine 102 to the fourth electric machine 182 via the first shaft 181, the power split device 180, and the second shaft 183. The fourth electric machine 182 generates electrical power. The electrical power is used to charge the third energy storage system 186 and/or used to power the fifth electric machine 188 via the inverter 184. The fifth electric machine 188 may receive power from the fourth electric machine 182 and/or the third energy storage system 186 via the inverter 184 and consume the electrical power to produce mechanical power (e.g., to rotate the third shaft 189 which, in turn, propels the vehicle).

Accordingly, in an example implementation of a series-parallel hybrid powertrain, the engine 102 can drive the final drive (e.g., wheels) (as in the parallel hybrid powertrain) and can be effectively disconnected from the wheels with only the fifth electric machine 188 providing power to wheels (as in the series hybrid powertrain).

Referring to FIGS. 1-3, generally, the system 100 includes an intake conduit 110 and an intake manifold 112. The intake conduit 110 is configured to route an intake gas stream, including air (e.g., ambient air, compressed air, etc.), to the intake manifold 112. The intake manifold 112 is configured to route the intake gas stream from an intake conduit 110 into the engine 102. More specifically, the intake manifold 112 is configured to route air from the intake conduit 110 to each of the cylinders 104.

The system 100 includes an exhaust manifold 116 and an exhaust conduit 118. The exhaust manifold 116 is configured to route an exhaust gas stream from the engine to the exhaust conduit 118. More specifically, the exhaust manifold 116 is configured to route an exhaust gas stream from each of the cylinders 104 to the exhaust conduit 118. The exhaust conduit 118 is configured to route the exhaust gas stream from the exhaust manifold 116 to a downstream component, such as the aftertreatment system 120 and/or the turbo device 122. In some embodiments, a first portion of the exhaust conduit 118 is disposed between the exhaust manifold 116 and turbo device 122. The first portion of the exhaust conduit 118 is configured to route the exhaust gas stream from the exhaust manifold 116 to turbo device 122. In some embodiments, a second portion of the exhaust conduit 118 is disposed between the aftertreatment system 120 and the turbo device 122. The second portion of the exhaust conduit 118 is configured to route the exhaust gas stream from the turbo device 122 to the aftertreatment system 120.

In some embodiments, the system 100 includes a bypass valve 119 (e.g., a solenoid valve, a butterfly valve, a glove valve, a gall valve, etc.). The bypass valve 119 is positioned along the exhaust conduit 118. As shown in FIGS. 1-3, the bypass valve 119 is positioned upstream of the turbo device 122. In other embodiments, the bypass valve 119 may be positioned downstream of the turbo device 122 and upstream of the aftertreatment system 120.

In any of these embodiments, the bypass valve 119 is operable between a first position and a second position. In the first position, the bypass valve 119 routes exhaust gas from the engine 102 to the aftertreatment system 120 (e.g., via the exhaust conduit 118). In the second position, the bypass valve 119 routes exhaust gas (at least a majority of exhaust gas as determined by a volumetric flow rate over a predefined amount of time) from the engine 102 to the atmosphere (e.g., via a tailpipe or another conduit). The bypass valve 119 may be selectively operated between the first position and the second position (e.g., via a solenoid, an actuator, etc. controlled by the controller 140). In an example operating scenario, the bypass valve 119 may be operated to the first position when the engine 102 is combusting fuel, such that exhaust gases containing carbon oxides, nitrogen oxides, sulfur oxides, particulate matter, etc. are routed to the aftertreatment system 120.

The aftertreatment system 120 is in exhaust gas receiving communication with the engine 102. The aftertreatment system 120 includes components used to reduce exhaust emissions, such as a selective catalytic reduction (SCR) catalyst, an oxidation catalyst (OC), a particulate filter (PF), a plurality of sensors for monitoring the aftertreatment system (e.g., a nitrogen oxide (NOx) sensor, temperature sensors, etc.), and/or still other components.

In some embodiments, the aftertreatment system 120 includes at least one heater 123. The at least one heater may be at least one an electric heater, at least one grid heater, etc. In the example shown, the at least one heater is at least one electrical heater 123 configured to consume electrical energy and produce or generate heat. The electrical energy may be received from an energy storage system, such as the first energy storage system 164, the second energy storage system 174, and the third energy storage system 186. The electrical energy may be received from an electric machine, such as the first electric machine 160 and/or the fourth electric machine 182. The heat produced by the heater 123 may be used to heat exhaust gases flowing through the aftertreatment system 120, which, in turn, may heat one or more components of the aftertreatment system 120.

In some embodiments, the aftertreatment system 120 includes a reductant delivery system 124 (e.g., an exhaust fluid doser with a supply of exhaust fluid) which may include a decomposition chamber (e.g., decomposition reactor, reactor pipe, decomposition tube, reactor tube, etc.) to convert the reductant (e.g., urea, Adblue^{®}, a urea water solution (UWS), an aqueous urea solution, etc.) into ammonia. The reductant delivery system 124 is configured to provide the reductant to the exhaust gas stream to aid in the catalytic reduction. The reductant may be injected by an injector upstream of the SCR catalyst member such that the SCR catalyst member receives a mixture of the reductant and exhaust gas. The reductant droplets undergo the processes of evaporation, thermolysis, and hydrolysis to form non-NOx emissions (e.g., gaseous ammonia, etc.) within the decomposition chamber, the SCR catalyst member, and/or the exhaust gas conduit system, which leaves the aftertreatment system 120.

The turbo device 122 may be any type of turbo machinery, such as a turbocharger. In some embodiments, the turbo device 122 is a variable geometry turbocharger. In other embodiments, the turbo device 122 has a different structure. The turbo device 122 may be operatively coupled to the engine 102 and/or another component of the system 100, such as a drivetrain, a battery, an electric machine, or other suitable component. In some embodiments, the turbo device 122 is configured to compress a gas stream (e.g., an intake gas stream, an exhaust gas stream, etc.) and provide the compressed gas stream to the engine 102. For example, as shown in FIG. 1, the turbo device 122 may be coupled to the intake manifold 112 such that the turbo device is operative to provide the compressed gas stream to the engine 102 (e.g., via the intake manifold 112).

In some embodiments, the system 100 includes a fuel system 150. The fuel system 150 is a system of storage tank(s), conduit(s), pump(s), filter(s), and/or any other components that are configured to route a fluid, such as fuel (e.g., diesel fuel, gasoline fuel, etc.), to the engine 102. The fuel system 150 is coupled to the engine 102. The fuel system 150 is configured to provide the fuel to the engine 102. The fuel system 150 is configured to receive the fuel (e.g., from a refueling station, from a fuel storage tank, etc.). In some embodiments, the fuel system 150 is configured to selectively prevent fuel from being supplied to the engine 102 during an engine braking process.

As shown, a plurality of sensors 125 are included in the system 100. The number, placement, and type of sensors included in the system 100 is shown for example purposes only. That is, in other configurations, the number, placement, and type of sensors may differ. The sensors 125 may be gas constituent sensors (e.g., NOₓ sensors, oxygen sensors, H₂O/humidity sensors, etc.), temperature sensors, particulate matter (PM) sensors, flow rate sensors (e.g., mass flow rate sensors, volumetric flow rate sensors, etc.), other exhaust gas emissions constituent sensors, pressure sensors, some combination thereof, and so on. In an example embodiment, the sensors 125 are configured as temperature sensors configured to acquire data regarding a temperature of a fluid, such as the exhaust gas in the aftertreatment system 120, air at or proximate the engine 102 (e.g., at or proximate the intake manifold 112 of the engine 102), or other fluid in the system 100 and/or acquire data regarding a temperature of a component of the system 100.

As shown in FIG. 1, the sensors 125 may be located at or proximate the intake conduit the engine 102, the fuel system 150, and/or the aftertreatment system 120. It should be understood that the location of the sensors may vary, and the system 100 may include more or fewer sensors than as shown in FIG. 1.

Additional sensors may be also included with the system 100. The sensors may include engine-related sensors (e.g., torque sensors, speed sensors, pressure sensors, flowrate sensors, temperature sensors, etc.). The sensors may further include sensors associated with other components of the vehicle, such as the aftertreatment system 120, the turbo device 122, or the reductant delivery system 124. For example, the sensor may include speed sensor of the turbo device 122, a fuel quantity and injection rate sensor, fuel rail pressure sensor, etc.).

The sensors 125 may be real or virtual (i.e., a non-physical sensor that is structured as program logic in the controller 140 that makes various estimations or determinations). For example, an engine speed sensor may be a real or virtual sensor arranged to measure or otherwise acquire data, values, or information indicative of a speed of the engine 102 (typically expressed in revolutions-per-minute). The sensor is coupled to the engine (when structured as a real sensor) and is structured to send a signal to the controller 140 indicative of the speed of the engine 102. When structured as a virtual sensor, at least one input may be used by the controller 140 in an algorithm, model, lookup table, etc. to determine or estimate a parameter of the engine (e.g., power output, etc.). Any of the sensors 125 described herein may be real or virtual.

The controller 140 is coupled, and particularly communicably coupled, to the sensors 125. Accordingly, the controller 140 is structured to receive data from one or more of the sensors 125 and provide instructions/information to the one or more sensors 125. The controller 140 may use the received data to control one or more components in the system 100 as described herein.

The operator input/output (I/O) 130 device may be coupled to the controller 140, such that information may be exchanged between the controller 140 and the I/O device, where the information may relate to one or more components of FIG. 1 or determinations (described below) of the controller 140. The operator I/O device enables an operator of the system 100 to communicate with the controller 140 and one or more components of the system 100 of FIG. 1. For example, the operator input/output device may include, but is not limited to, an interactive display, a touchscreen device, one or more buttons and switches, voice command receivers, etc. In this way, the operator input/output device may provide one or more indications or notifications to an operator, such as a malfunction indicator lamp (MIL), etc. Additionally, the vehicle may include a port that enables the controller 140 to connect or couple to a scan tool so that fault codes and other information regarding the vehicle may be obtained.

The controller 140 is structured to control, at least partly, the operation of the system 100 and associated sub-systems, such as the engine 102 and the operator I/O device 130. Communication between and among the components may be via any number of wired or wireless connections. For example, a wired connection may include a serial cable, a fiber optic cable, a CAT5 cable, or any other form of wired connection. In comparison, a wireless connection may include the Internet, Wi-Fi, cellular, radio, etc. In one embodiment, a controller area network (CAN) bus provides the exchange of signals, information, and/or data. The CAN bus includes any number of wired and wireless connections. Because the controller 140 is communicably coupled to the systems and components of FIG. 1, the controller 140 is structured to receive data from one or more of the components shown in FIG. 1. The structure and function of the controller 140 is further described in regard to FIG. 2.

As the components of FIG. 1 are shown to be embodied in the system 100, the controller 140 may be structured as one or more electronic control units (ECUs), such as one or more microcontrollers. The controller 140 may be separate from or included with at least one of a transmission control unit, an exhaust aftertreatment control unit, a powertrain control module, an engine control unit, an engine control module, etc.

In other embodiments of the system 100, one or more components or systems of the system 100 shown in FIGS. 1-3 may be omitted and/or added thereto.

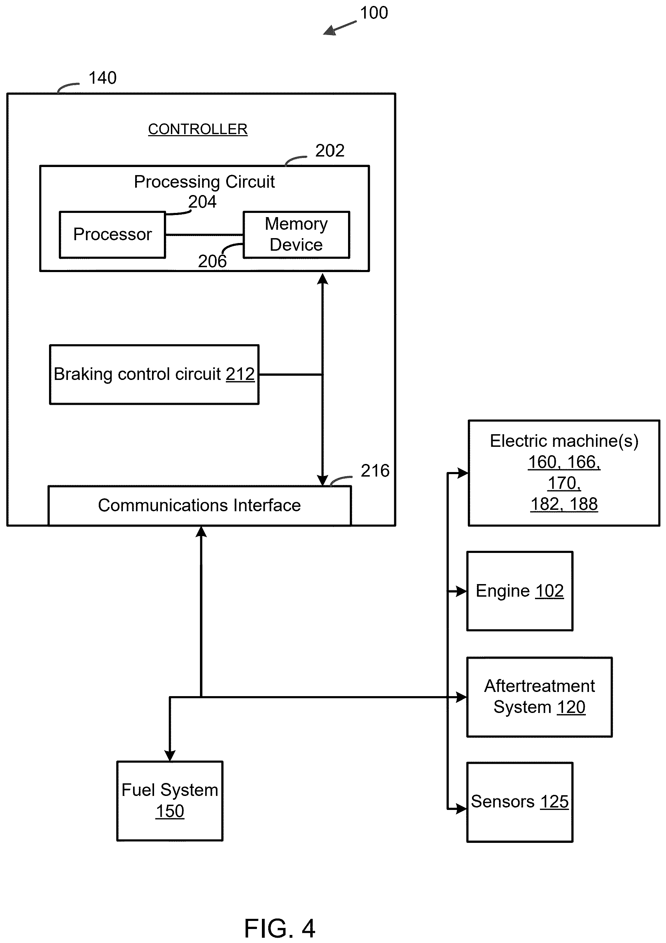

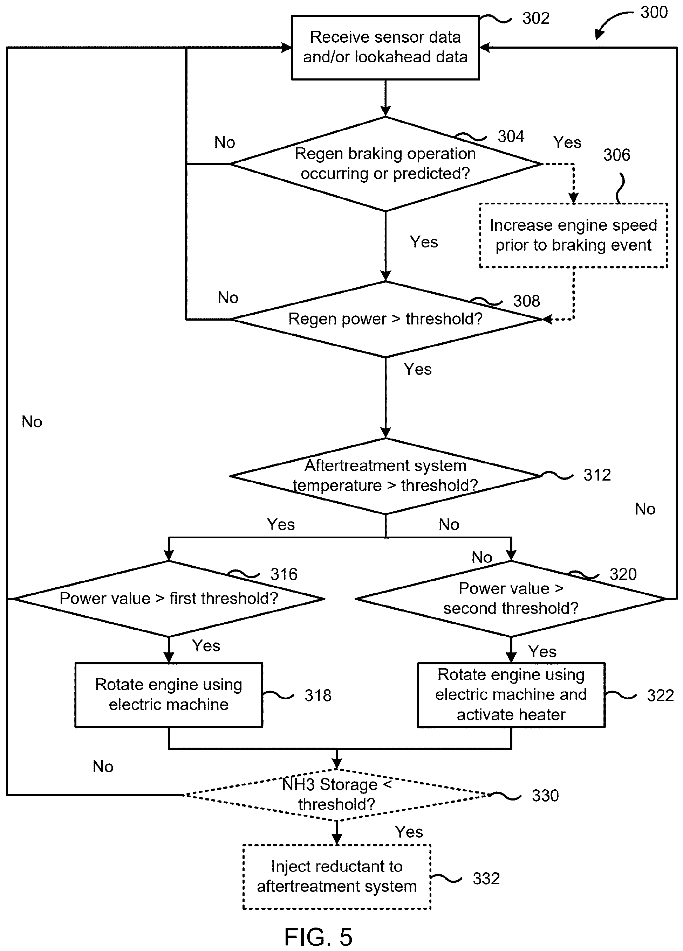

Now referring to FIG. 4, a schematic diagram of the controller 140 of the system 100 of FIG. 1 is shown, according to an example embodiment. As shown, the controller 140 includes at least one processing circuit 202 having at least one processor 204 and at least one memory device 206, a braking control circuit 212, and a communications interface 216. The controller 140 is structured to control operation of the other components of the system 100. In some embodiments, the controller 140 may control operation of the fuel system 150, the engine 102, one or more electric machines (e.g., the first electric machine 160, the second electric machine 166, the third electric machine 170, the fourth electric machine 182, and/or the fifth electric machine 188), and/or other components of the system 100 to achieve a desired aftertreatment system temperature, which, in turn can improve (e.g., increase) the reduction of certain exhaust gas species, such as NOx, in the aftertreatment system 120. For example, the controller 140 may operate one or more valves (e.g., the bypass valve 119), motors, actuators, heaters (e.g., the electric heater 123), or other suitable devices to achieve the desired aftertreatment system temperature or range of temperatures. An example method for controlling the components of the system 100 is described herein with respect to FIG 5.

In one configuration, the braking control circuit 212 is embodied as machine or computer-readable media storing instructions that are executable by a processor, such as processor 204. As described herein and amongst other uses, the machine-readable media facilitates performance of certain operations to enable reception and transmission of data. For example, the machine-readable media may provide an instruction (e.g., command, etc.) to, e.g., acquire data. In this regard, the machine-readable media may include programmable logic that defines the frequency of acquisition of the data (or, transmission of the data). The computer readable media instructions may include code, which may be written in any programming language including, but not limited to, Java or the like and any conventional procedural programming languages, such as the "C" programming language or similar programming languages. The computer readable program code may be executed on one processor or multiple remote processors. In the latter scenario, the remote processors may be connected to each other through any type of network (e.g., CAN bus, etc.).

In another configuration, the braking control circuit 212 is embodied as a hardware unit, such as one or more electronic control units. As such, the braking control circuit 212 may be embodied as one or more circuitry components including, but not limited to, processing circuitry, network interfaces, peripheral devices, input devices, output devices, sensors, etc. In some embodiments, the braking control circuit 212 may take the form of one or more analog circuits, electronic circuits (e.g., integrated circuits (IC), discrete circuits, system on a chip (SOCs) circuits, microcontrollers, etc.), telecommunication circuits, hybrid circuits, and any other type of "circuit." In this regard, the braking control circuit 212 may include any type of component for accomplishing or facilitating achievement of the operations described herein. For example, a circuit as described herein may include one or more transistors, logic gates (e.g., NAND, AND, NOR, OR, XOR, NOT, XNOR, etc.), resistors, multiplexers, registers, capacitors, inductors, diodes, wiring, and so on. The braking control circuit 212 may also include or be programmable hardware devices such as field programmable gate arrays, programmable array logic, programmable logic devices or the like. The braking control circuit 212 may include one or more memory devices for storing instructions that are executable by the processor(s) of the braking control circuit 212. The one or more memory devices and processor(s) may have the same definition as provided below with respect to the memory device 206 and processor 204. In some hardware unit configurations, the braking control circuit 212 may be geographically dispersed throughout separate locations in the vehicle. Alternatively, and as shown, the braking control circuit 212 may be embodied in or within a single unit/housing, which is shown as the controller 140.

In the example shown, the controller 140 includes the at least one processing circuit 202 having the at least one processor 204 and the at least one memory device 206. The processing circuit 202 may be structured or configured to execute or implement the instructions, commands, and/or control processes described herein with respect to the braking control circuit 212. The depicted configuration represents the braking control circuit 212 as being embodied as machine or computer-readable media storing instructions (which may be stored by the memory device 206). However, as mentioned above, this illustration is not meant to be limiting as the present disclosure contemplates other embodiments where the braking control circuit 212 is configured as a hardware unit. All such combinations and variations are intended to fall within the scope of the present disclosure.

The at least one processor 204 may be implemented as one or more single- or multi-chip processors, digital signal processors (DSPs), application specific integrated circuits (ASICs), field programmable gate arrays (FPGAs), and/or suitable processors (e.g., other programmable logic devices, discrete hardware components, etc. to perform the functions described herein). A processor may be a microprocessor, a group of processors, etc. A processor also may be implemented as a combination of computing devices, such as a combination of a DSP and a microprocessor, a plurality of microprocessors, one or more microprocessors in conjunction with a DSP core, or any other such configuration. In some embodiments, the one or more processors may be shared by multiple circuits. Alternatively or additionally, the one or more processors may be structured to perform or otherwise execute certain operations independent of one or more coprocessors. In other example embodiments, two or more processors may be coupled via a bus to enable independent, parallel, pipelined, or multi-threaded instruction execution. All such variations are intended to fall within the scope of the present disclosure.

The at least one memory device 206 (e.g., memory, memory unit, storage device) may include one or more devices (e.g., RAM, ROM, Flash memory, hard disk storage) for storing data and/or computer code for completing or facilitating the various processes, layers and modules described in the present disclosure. For example, the memory device 206 may include dynamic random-access memory (DRAM). The memory device 206 may be communicably connected to the processor 204 to provide computer code or instructions to the processor 204 for executing at least some of the processes described herein. Moreover, the memory device 206 may be or include tangible, non-transient volatile memory, or non-volatile memory. Accordingly, the memory device 206 may include database components, object code components, script components, or any other type of information structure for supporting the various activities and information structures described herein.

The communications interface 216 may include any combination of wired and/or wireless interfaces (e.g., jacks, antennas, transmitters, receivers, transceivers, wire terminals) for conducting data communications with various systems, devices, or networks structured to enable in-vehicle communications (e.g., between and among the components of the vehicle) and out-of-vehicle communications (e.g., with a remote server)(when the system 100 is embodied within a vehicle). For example, and regarding out-of-vehicle/system communications, the communications interface 216 may include an Ethernet card and port for sending and receiving data via an Ethernet-based communications network and/or a Wi-Fi transceiver for communicating via a wireless communications network. The communications interface 216 may be structured to communicate via local area networks or wide area networks (e.g., the Internet) and may use a variety of communications protocols (e.g., IP, LON, Bluetooth, ZigBee, radio, cellular, near field communication).

As shown in FIG. 2, the communications interface 216 may enable communication with the engine 102, the aftertreatment system 120 (and/or a component thereof, such as the heater 123 and/or the reductant delivery system 124), the one or more sensors 125, the fuel system 150, and/or one or more electric machines (e.g., the first electric machine 160, the second electric machine 166, the third electric machine 170, the fourth electric machine 182, and/or the fifth electric machine 188). In some embodiments, the communications interface 216 may enable communication with other components of the system 100, such as the bypass valve 119, an energy storage system (e.g., the first energy storage system 164, the second energy storage system 174, or the third energy storage system 186).

In some embodiments, the controller 140 may receive "lookahead data." The "lookahead data" refers to information regarding one or more future engine and/or vehicle operating conditions, such as upcoming road conditions (e.g., traffic construction, etc.), road grade (uphill, flat, downhill), route curvature information, and/or weather conditions (e.g., wind speed and direction, ambient temperature, etc.). The lookahead data may be received from one or more sensors 125 (e.g., road grade sensors, ambient temperature sensors, etc.) and/or from a remote computing system (e.g., a weather service, a traffic service, or other service). In some embodiments, the lookahead data may also include information regarding a route of the vehicle, such as an origin location, a destination location, turn-by-turn directions between the origin and the destination, a departure time, a desired arrival time, an estimated time of arrival, etc.

The controller 140 may determine or receive information indicating that a braking event is beginning or expected to occur. As one example, the controller 140 may receive an indication of or determine that a braking event is beginning or expected to occur based on receiving an operator input (e.g., depression of a brake pedal, actuation of a lever or button, etc.), and/or a vehicle speed being at or above (or expected to be at or above) a predetermined threshold in certain road conditions (e.g., on a downhill or negative grade road). Responsive to determining or receiving information indicating that a braking event is beginning or expected to occur, the controller 140 may receive or determine a "braking power demand value".

In some embodiments, the controller 140 may receive data regarding the braking power demand value (e.g., from one or more sensors 125). The "braking power demand" value is an amount of power requested to be applied for slowing or decelerating the engine 102. The braking power demand value may be measured in horsepower, watts, or another suitable unit of power. In some embodiments, the braking power demand is based on a user input, such as a user depressing a brake pedal or another suitable user input. In other embodiments, the braking power demand is based on sensor data received from one or more sensors 125, such as sensor data regarding a cruise control or adaptive cruise control system that indicates that a speed of the vehicle embodying the system 100 is at or above a target speed value and/or (in the case of adaptive cruise control) that a distance between the system 100 and a vehicle or other obstacle ahead of the system 100 is at or below a predetermined threshold (e.g., a minimum or target following distance).

In some embodiments, the controller 140 may use one or more of a lookup table or a model (e.g., a mathematical model, a machine learning model, an artificial intelligence model, etc.) to determine the braking power demand value. As a specific example, the requested braking power demand value may be a function of an amount of depression of the brake pedal, such that further depression of the brake pedal corresponds with more requested braking power (higher braking power demand values).

During the braking event, the controller 140 may implement one or more braking controls. More specifically, the controller 140 (or one or more components thereof, such as the braking control circuit 212) is structured to enable or implement one or more braking controls or braking mechanisms. In some embodiments, the one or more braking controls includes a regenerative braking process or operation, whereby one or more electric machines (e.g., the first electric machine 160, the second electric machine 166, the third electric machine 170, the fourth electric machine 182, and/or the fifth electric machine 188) captured energy from braking to generate electrical power. In some embodiments, the one or more braking controls includes an engine braking process or operation (e.g., a "standard" or "normal" engine braking process), whereby combustion of fuel in the engine 102 is ceased (e.g., because the controller 140 causes the fuel system 150 to cease providing fuel to the engine 102) and rotation of the engine 102 is slowed due to the cylinders 104 compressing air (e.g., ambient air) received therein. In some embodiments, the regenerative braking process and the engine braking process may be performed concurrently or partially concurrently. In other embodiments, the one or more braking controls includes a friction braking process, whereby a friction brake is activated to slow the engine 102. The controller 140 can implement any of the above-described braking processes individually or in combination (e.g., sequentially, or at least partially concurrently).

The controller 140 is structured to enable or implement one or more controls to achieve a desired aftertreatment system temperature or range of temperatures, which, in turn can improve (e.g., increase) the reduction of certain exhaust gas species, such as NOx, in the aftertreatment system 120. More specifically, the controller 140 is structured to enable or implement the one or more controls before (e.g., a predefined distance and/or time before an expected or predicted braking event) and/or during a braking event.

In one example implementation, during a normal engine braking process, a temperature of the air (e.g., ambient air) passing through the engine 102 and into the aftertreatment system 120 is substantially below the temperature of the aftertreatment system 120 (or one or more components thereof), which leads to cooling of the components of the aftertreatment system 120. Cooling of the components of the aftertreatment system 120 below a predetermined threshold or below predetermined range of desired temperature values can result in reduced catalytic activity, which, in turn, can lead to an increased amount of harmful exhaust gas constituents (e.g., NOx) in the exhaust gas at the outlet of the aftertreatment system 120.

Advantageously, the controller or control system 140 described herein may enable or implement one or more controls to mitigate heat losses (e.g., cooling) of the aftertreatment system 120 during a normal engine braking process in order to maintain or warm the aftertreatment system 120 or one or more components thereof. By way of example, the controller 140 may activate or increase a heat output by the electric heater 123.

In another example implementation, in a situation where the aftertreatment system temperature is above a predetermined threshold or above a predetermined range of desired temperature values the catalytic activity of a catalyst member in the aftertreatment system 120 can be reduced, which, in turn, can lead to an increased amount of harmful exhaust gas constituents (e.g., NOx) in the exhaust gas at the outlet of the aftertreatment system 120. Further, when the aftertreatment system temperature is above a predetermined threshold or above a predetermined range of desired temperature values, the catalyst member can become damaged or prematurely aged. In these situations, the normal engine braking process alone may not provide enough cooling to reduce the aftertreatment system temperature to or below the predetermined threshold or within the predetermined range of desired temperature values. Advantageously, the controller 140 may enable or implement one or more controls to further cool the aftertreatment system 120 during the engine braking process by modifying the engine braking process and implementing the modified engine braking process.

In some embodiments, the controller 140 may modify the standard engine braking process or operation (e.g., a "modified" engine braking process) and implement the modified engine braking process (e.g., as part of the one or more braking controls). The modified engine braking process includes selectively causing, by the controller 140, one or more electric machines (e.g., the first electric machine 160, the second electric machine 166, the third electric machine 170, the fourth electric machine 182, and/or the fifth electric machine 188) to rotate or "spin" the engine 102 to allow additional air to flow through the engine 102 and into the aftertreatment system 120. For example, the controller 140 may cause the one or more electric machines (e.g., the first electric machine 160, the second electric machine 166, the third electric machine 170, the fourth electric machine 182, and/or the fifth electric machine 188) to consume electrical energy (e.g., received from the regenerative braking process and/or received from an energy storage system, such as the first energy storage system 164, the second energy storage system 174, or the third energy storage system 186) to rotate the engine 102.

By way of example, the controller 140 may implement the modified engine braking process responsive to an aftertreatment system temperature value being above an upper predefined threshold associated with a desired conversion operating range. The "desired conversion operating range" refers to a set of temperature values that correspond to a desired operating temperature of the aftertreatment system 120. Operating the aftertreatment system 120 at a temperature above the desired conversion operating range (e.g., above the upper predefined threshold) can result in decreased or undesired catalytic activity, which, in turn can lead to increased harmful exhaust gas emissions (e.g., NOx) at the outlet of the aftertreatment system 120). Operating the aftertreatment system 120 at a temperature below the desired conversion operating range (e.g., below a lower upper predefined threshold) can result in decreased or undesired catalytic activity, which, in turn can lead to increased harmful exhaust gas emissions (e.g., NOx) at the outlet of the aftertreatment system 120). Advantageously, implementing the modified engine braking process causes additional air (e.g., ambient air) to flow through the engine 102 and to the aftertreatment system 120 (compared to the standard engine braking process) which, in turn, can cause the aftertreatment system temperature value to decrease to or below the upper predefined threshold.

Additionally and/or alternatively, the controller 140 may implement one or more additional controls to achieve the desired aftertreatment system temperature by mitigating heat losses during an engine braking process (e.g., when the aftertreatment system temperature is at or below the lower predetermined threshold associated with the desired conversion operating range) and/or by reducing the aftertreatment system temperature during the engine braking process (e.g., when the aftertreatment system temperature is above the upper predetermined threshold).

In an example embodiment, the controller 140 may implement a first control whereby the controller 140 limits a speed of the engine 102 based the braking power demand value. Responsive to receiving the braking power demand value, the controller 140 may limit a speed of the engine 102 to a predefined engine speed value based on the braking power demand value. By way of example, the controller 140 may use one or more of a lookup table or a model (e.g., a mathematical model, a machine learning model, etc.) that correlates the braking power demand value to the predefined engine speed value. The controller 140 may receive the predefined engine speed value as an output from the lookup table or model, and, responsive to receiving the predefined engine speed value, the controller 140 may cause the engine 102 to decrease the speed of the engine 102 to predefined engine speed value, approximately. Advantageously, limiting the engine speed value to the predefined engine speed value can decrease or minimize the amount of air (e.g., ambient air) that passes through the engine 102 to the aftertreatment system 120, thereby mitigating heat losses due to engine braking. The lower the engine speed the lower the amount of air is breathed in through the engine to the aftertreatment system to then decrease a temperature of the aftertreatment system.

In another example embodiment, the controller 140 may implement a second control whereby the controller 140 implements a regenerative braking process during the engine braking process. During the regenerative braking process, the controller 140 causes an electric machine (e.g., the second electric machine 166, the third electric machine 170, or the fifth electric machine 188) to generate electrical energy by absorbing mechanical energy from a corresponding shaft (e.g., the second shaft 167, the shaft 171, or the third shaft 189, respectively). The controller 140 may cause the corresponding inverter (e.g., the inverter 162, the inverter 172, or the inverter 184, respectively) to provide the generated electrical power to the corresponding energy storage system (e.g., the first energy storage system 164, the second energy storage system 174, or the third energy storage system 186, respectively) in order to charge the corresponding energy storage system.

Additionally, the controller 140 may cause the corresponding inverter (e.g., the inverter 162, the inverter 172, or the inverter 184, respectively) to provide the generated electrical power to the heater 123 to heat the ambient air entering the aftertreatment system 120 during the engine braking process. Providing the generated electrical power to the heater 123 to heat the ambient air entering the aftertreatment system 120 during the braking event mitigates heat losses in the aftertreatment system during the engine braking process by directly heating the ambient air entering the aftertreatment system 120 during the engine braking process. Advantageously, implementing the regenerative braking process during the engine braking process uses braking energy to directly mitigate heat losses due to engine braking.

Still referring to the second control, implementing the regenerative braking process during the engine braking process can reduce the speed of the engine 102 by a greater amount compared to engine braking alone. As described above with respect to the first example embodiment, the reduced speed of the engine 102 during the engine braking process can result in less ambient air entering the aftertreatment system 120, which, in turn, advantageously mitigates heat losses due to engine braking.

The controller 140 may implement the regenerative braking process based on, for example, a current engine speed, a braking power demand value, and/or a road condition. By way of example, the controller 140 may implement the regenerative braking process when the road grade is below a threshold (e.g., negative road grade indicating a downhill road condition) and when an engine speed value exceeds a predetermined engine speed threshold. When implementing the regenerative braking process an electric machine (e.g., the second electric machine 166, the third electric machine 170, and/or the fifth electric machine 188) rotates counter to the forward direction to slow the vehicle and/or the engine 102.

In yet another example embodiment, the controller 140 may implement a third control, whereby the controller 140 controls operation of the bypass valve 119 during the engine braking process. By way of example, during the engine braking process, the controller 140 may operate the bypass valve 119 (e.g., to open or partially open the bypass valve 119) such that the ambient air flowing through the engine 102 is routed to the atmosphere (e.g., instead of the aftertreatment system 120). In some embodiments, the controller 140 may implement the third control responsive to the temperature value regarding the aftertreatment system being at or below a temperature threshold (e.g., the lower predetermined threshold). In this way, the amount of ambient air entering the aftertreatment system 120 is reduced, which, in turn, mitigates the cooling of the aftertreatment system due to the ambient air.

In still another example embodiment, the controller 140 may use any combination of the first control, the second control, or the third control based using lookahead data (e.g., in addition to or instead of current or "real-time" sensor data). By way of example, the controller 140 implement the first control, the second control, the third control, or a combination thereof responsive to the lookahead data indicating that a future aftertreatment system temperature value will be at or below the lower predetermined threshold associated with the desired conversion operating range. The controller 140 may receive the future aftertreatment system temperature value (e.g., as part of the lookahead data) and/or determine the future aftertreatment system temperature value based on the lookahead data. For example, the future aftertreatment system temperature value may be based on a current aftertreatment system temperature value, a current or expected engine operating conditions during a predetermined time period, and a lookup table or model that correlates the current aftertreatment system temperature value and the current or expected engine operating conditions with the future aftertreatment system temperature value.

In some embodiments, when implementing the first control, the second control, or a combination thereof (using current data or lookahead data), reducing the speed of the engine 102 during the engine braking process can, in some instances, result in heating the aftertreatment system 120 (or one or more components thereof). By way of example, if the temperature of the ambient air entering the aftertreatment system 120 is at or above a predetermined temperature threshold and/or when the flow rate (e.g., mass flow rate, volumetric flow rate, etc.) of the ambient air entering the aftertreatment system 120 is at or below a predetermined flow rate threshold, implementing the first control, the second control, or a combination thereof can result in heating the aftertreatment system 120 (or one or more components thereof).

In yet another example embodiment, the controller 140 may implement a fourth control to increase a duration (e.g., a period of time) of the engine braking process. By way of example, the controller 140 may use lookahead data to predict when a braking event will occur or will likely occur. As described above, the controller 140 may determine that a braking event will occur or will likely occur based on an operator input (e.g., depression of a brake pedal, actuation of a lever or button, etc.) and/or a vehicle speed expected to be at or above a predetermined threshold in certain road conditions (e.g., downhill conditions). Responsive to predicting that the braking event will occur or will likely occur within a predetermined duration (e.g., within a predetermined period of time from a current time or within a predetermined distance from the system 100), the controller 140 may implement the engine braking process. Additionally, the controller 140 may implement one or more of the first control, the second control, or the third control, as described above. In this way, the controller 140 may implement the engine braking process (and, optionally, one or more controls) before receiving a user input regarding the braking power demand value, thereby increasing the duration of the engine braking process. By way of example, the controller 140 may implement the second control to increase an amount of energy captured during the regenerative braking process. Thus, increasing the duration of the engine braking process advantageously increases the total amount of electrical energy that is available for heater 123 to heat the air entering the aftertreatment system 120.

In an example embodiment, the controller 140 receives a temperature value regarding the aftertreatment system 120. The controller 140 also receives a regeneration power value regarding one or more electric machines (e.g., the first electric machine 160, the second electric machine 166, the third electric machine 170, the fourth electric machine 182, and/or the fifth electric machine 188) of the system 100. The controller 140 compares the temperature value to a temperature threshold. Responsive to the temperature value being above the temperature threshold and the regeneration power value being at or above a first power threshold, the controller 140 causes the one or more electric machines (e.g., the first electric machine 160, the second electric machine 166, the third electric machine 170, the fourth electric machine 182, and/or the fifth electric machine 188) to rotate the engine 102. Responsive to the temperature value being below the temperature threshold and the regeneration power value being at or above a second power threshold, the controller 140 causes the one or more electric machines (e.g., the first electric machine 160, the second electric machine 166, the third electric machine 170, the fourth electric machine 182, and/or the fifth electric machine 188) to rotate the engine 102 and activates the heater 123 associated with the aftertreatment system 120 to heat the aftertreatment system 120.

In some embodiments, the controller 140 compares the regeneration power value to a regeneration power threshold corresponding to an amount of electrical power required by one or more predefined electrical sub-systems of the system 100. The regeneration power value is at or above the regeneration power threshold when the one or more electric machines (e.g., the first electric machine 160, the second electric machine 166, the third electric machine 170, the fourth electric machine 182, and/or the fifth electric machine 188) produce more electrical power than the amount of electrical power required by the one or more predefined electrical sub-systems of the system. The temperature value is compared to the temperature threshold responsive to the regeneration power value being at or above the regeneration power threshold.

FIG. 5 is a flow diagram of an example method 300 of implementing one or more controls to achieve a desired aftertreatment system temperature value. In particular, the controller 140 and/or one or more components thereof, such as the braking control circuit 212, is configured to implementing one or more controls before or during a braking event to achieve the desired aftertreatment system temperature value. As described herein, the braking event may include the engine braking process, the regenerative braking process, or both. That is, the controller 140 may selectively cause the one or more components of the system 100 to implement the engine braking process, the regenerative braking process, or both during the braking event. It should be understood that the order of the method 300 is shown as an example only. That is, one or more processes may be performed concurrently, partially concurrently, sequentially, and/or in a different order than as shown in FIG. 5. Further, some processes of the method 300 may be omitted while other processes may be added to the method 300 The method 300 may be performed periodically and/or dynamically responsive to changes in, for example, information received from the sensors 125.

At process 302, the controller 140 receives sensor data and/or lookahead data. The sensor data may be received from one or more sensors 125. In some embodiments, the sensor data may include information regarding a braking event, such as braking power demand value received from a corresponding sensor. In some embodiments, the sensor data may include information regarding an energy storage system (e.g., the first energy storage system 164, the second energy storage system 174, or the third energy storage system 186), such as a state of charge (SOC) value.

In some embodiments, the sensor data may include information regarding the aftertreatment system 120. For example, the sensor data may include an aftertreatment system temperature value regarding a temperature of one or more components of the aftertreatment system 120 and/or a temperature of the exhaust gas flowing through the aftertreatment system 120, received from one or more temperature sensors 125. In another example, the sensor data may include an aftertreatment system storage value, particularly an ammonia (NH₃) storage value regarding an amount of ammonia stored by a component of the aftertreatment system 120, such as a catalyst member (e.g., an SCR catalyst member). By way of example, the controller 140 may receive an ammonia storage value for the aftertreatment system 120 and/or a component thereof (e.g., an SCR catalyst member). The ammonia storage value is an amount of ammonia stored by the aftertreatment system 120 and/or a component thereof. The controller 140 may receive the ammonia storage value from the memory device 206 or as an output of a model or lookup table. By way of example, the model or lookup table may correlate one or more inputs such as a temperature, a NOx value, or other suitable inputs (which may be received from a corresponding sensor 125), with the ammonia storage value. For instance, the ammonia storage value can be determined based on at least one suitable empirical formula (e.g., using data from one or more components of the system 100), based on a physics-based or a map-based model, and/or via another suitable method. For example, lab-based results may be used to correlate one or more inputs (e.g., an engine-out NOx value (EONOx value), temperature, etc.) for various conditions (e.g., age of the catalyst, operating conditions, and so on) in order to determine the ammonia storage value for various conditions. Following below are various examples of the ammonia storage controls.

In some embodiments, the sensor data may include information regarding one or more electric machines (e.g., the first electric machine 160, the second electric machine 166, the third electric machine 170, the fourth electric machine 182, and/or the fifth electric machine 188), such as a "regeneration power value," received from one or more sensors 125 (e.g., a power sensor, a voltage sensor, a current sensor, etc.). The "regeneration power value" refers to an amount of power being generated by an electric machine (e.g., the first electric machine 160, the second electric machine 166, the third electric machine 170, the fourth electric machine 182, and/or the fifth electric machine 188) during a regenerative braking process. In some embodiments, the regeneration power value is an instantaneous value. In other embodiments, the regeneration power value is an average value measured over a predefined period of time.

The controller 140 may determine the regeneration power value based on information received from one or more sensors. In one example implementation, the controller 140 may receive a voltage value regarding the voltage of electrical power generated by the electric machine from a voltage sensor coupled to the electric machine. The controller 140 may determine the regeneration power value based on the voltage value and a known resistance value. The known resistance value is the electrical resistance (measured in Ohms) of an electrical circuit that connects an energy storage system (e.g., the first energy storage system 164, the second energy storage system 174, or the third energy storage system 186) to the electric machine. The known resistance value may include the resistance of the energy storage system. The regeneration power value may be equal to the voltage squared divided by the known resistance value, in some implementations.

In another example implementation, the controller 140 may receive a current value regarding the current of electrical power generated by the electric machine from a current sensor coupled to the electric machine. The controller 140 may determine the regeneration power value based on the current value and the known resistance value. The regeneration power value may be equal to the current squared multiplied by the known resistance value, in some implementations.

In some embodiments and as described above, the lookahead data may be received from one or more sensors 125 (e.g., road grade sensors, ambient temperature sensors, etc.) and/or from a remote computing system (e.g., a weather service, a traffic service, or other service). In some embodiments, the lookahead data may include information regarding one or more future engine and/or vehicle operating conditions, such as upcoming road conditions (e.g., traffic construction, etc.), road grade (uphill, flat, downhill), and/or weather conditions (e.g., wind speed and direction, ambient temperature, etc.). In some embodiments, the lookahead data may include information regarding a route of the vehicle, such as an origin location, a destination location, turn-by-turn directions between the origin and the destination, a departure time, a desired arrival time, an estimated time of arrival, etc.

At process 304, the controller 140 determines whether a regenerative braking process is currently occurring or is predicted to occur (e.g., within a predefined time period). In some embodiments, the controller 140 may determine that the regenerative braking process is currently occurring responsive to the braking power demand value being at or above a predefined braking power threshold. For instance, when the braking power demand value is at or above than the braking power threshold, the controller 140 may determine that there is sufficient energy for the electric machine(s) (e.g., the first electric machine 160, the second electric machine 166, the third electric machine 170, the fourth electric machine 182, and/or the fifth electric machine 188) to capture and convert into electrical energy that may be reused for other applications (e.g., charging one or more batteries, operating an electronic device, etc.). In some embodiments, the controller 140 may determine that the regenerative braking process is currently occurring responsive to the regeneration power value being at or above a first regeneration power threshold. The first regeneration power threshold is a minimum amount of power generated by an electric machine that is detectable by one or more sensors. For instance, the regeneration power value is positive (e.g., greater than zero) when the electric machine(s) (e.g., the first electric machine 160, the second electric machine 166, the third electric machine 170, the fourth electric machine 182, and/or the fifth electric machine 188) are capturing energy and converging the energy into electrical power (e.g., during a regenerative braking process). Thus, when the regeneration power value is at or above a first regeneration power threshold, the electric machine(s) is/are generating electrical power.

Responsive to determining that the regenerative braking process is occurring, the controller 140 may proceed to process 308. By way of example, responsive to at least one of the braking power demand value being at or above than the braking power threshold and/or the responsive to the regeneration power value being at or above the first regeneration power threshold, the controller 140 may proceed to process 308.

In some embodiments, the controller 140 may determine that the regenerative braking process is predicted to occur (e.g., within a predefined time period) based on the lookahead data. By way of example, the controller 140 may determine that regenerative braking process is predicted to occur based on the lookahead data indicating an upcoming change (e.g., decrease) in speed, such as a stop sign, a traffic light, a speed limit change (e.g., speed limit decrease), increased traffic, a decrease in road grade, a decrease in a cruise control speed, and so on. That is, the controller 140 is configured to predict, based on the lookahead data, that the regenerative braking process will occur (or will likely occur) within the predefined time period or operational period. Responsive to determining that the regenerative braking process is predicted to occur, the controller 140 may proceed to process 306 and/or process 308.

Responsive to determining that the regenerative braking process is not occurring and/or responsive to determining that the regenerative braking process is not predicted to occur, the controller 140 may return to process 302.

At process 306, responsive to determining that the regenerative braking process is predicted to occur, the controller 140 may cause a speed of the engine 102 (e.g., an engine speed value) to increase (e.g., from a first value to a second value, greater than the first value). Advantageously, by increasing the engine speed value prior to the regenerative braking process, the duration (e.g., amount of time) over which the predicated regenerative braking process will occur is increased. As described above, increasing the duration of the engine braking process advantageously increases the total amount of electrical energy that is generated during the regenerative braking process, which, in turn, may be used for other functions of the system 100, such as powering the heater 123.

At process 308, the controller 140 compares the regeneration power value to a second regeneration power threshold. In some embodiments, the second regeneration power threshold is an amount of electrical power required to power the electrical systems of the system 100 (excluding the electric machine(s)). For example, the second regeneration power threshold may be a summation of the electrical power required to power lights, dashboards, HVAC systems, and/or other electrical systems of the system 100. When the regeneration power value is at or above the second regeneration power threshold, the electric machine(s) are generating more power than what is used by the electrical systems of the system 100.

In other embodiments, the second regeneration power threshold is an amount of power that can be received by an energy storage system (e.g., the first energy storage system 164, the second energy storage system 174, or the third energy storage system 186), which is referred to herein as an "energy storage system limit" or "battery power limit." The battery power limit may be based on, for example, a current SOC of the energy storage system. For example, the battery power limit is relatively higher at relatively lower SOC values and relatively lower at relatively higher SOC values. When the regeneration power value is at or above the second regeneration power threshold, the electric machine(s) are generating more power than what can be used to charge the energy storage system.

Responsive to the regeneration power value being at or above the second regeneration power threshold, the controller 140 proceed to process 312. Responsive to the regeneration power value being below the second regeneration power threshold, the controller 140 returns to process 302.

At process 312, the controller 140 compares the aftertreatment system temperature value to a first temperature threshold (e.g., the lower predetermined threshold associated with the desired conversion operating range). Responsive to the aftertreatment system temperature value being at or above the first temperature threshold (indicating that the aftertreatment system 120 does not need to be further warmed and/or that the aftertreatment system 120 can be cooled while maintaining desirable aftertreatment system performance), the controller 140 proceed to process 316. Responsive to the aftertreatment system temperature value being below the first temperature threshold (indicating that the aftertreatment system 120 can be further warmed to achieve desirable aftertreatment system performance and/or that cooling of the aftertreatment system 120 should be mitigated to prevent undesirable aftertreatment system performance), the controller 140 proceeds to process 320.

At process 316, the controller 140 compares a power value to a first power threshold. The first power threshold is an amount of power required by an electric machine (e.g., the first electric machine 160, the third electric machine 170, the fourth electric machine 182, and/or the fifth electric machine 188) to rotate the engine 102. In some embodiments, the power value is the regeneration power value. In other embodiments, the power value is an "excess" power value. The "excess" power value refers to a difference between the regeneration power value and an amount of power being used by the system 100 (e.g., to charge an energy storage system and/or power one or more electrical devices, such as the heater 123). Responsive to the power value being at or above the first predetermined power threshold (indicating that sufficient power is available for a modified engine braking process), the controller 140 may proceed to process 318. Responsive to the power value being below the first power threshold, the controller 140 may return to process 302. Additionally and/or alternatively, responsive to the power value being below the first power threshold, the controller 140 may implement a normal engine braking process.

At process 318, the controller 140 causes an electric machine (e.g., the first electric machine 160, the third electric machine 170, or the fifth electric machine 188) to rotate the engine 102. For example, the controller 140 may implement a modified engine braking process. Advantageously, rotating the engine 102 using the electric machine (e.g., the first electric machine 160, the third electric machine 170, or the fifth electric machine 188) using the regenerative braking power and/or the excess power allows the controller 140 to control the flow of air through the engine 102 to the aftertreatment system 120. By way of example, the controller 140 may limit the flow of air through the engine 102 to the aftertreatment system 120 to mitigate cooling of the aftertreatment system 120 by the air.

At process 320, the controller 140 compares a power value to a second power threshold. The second power threshold is a summation of an amount of power required by an electric machine (e.g., the first electric machine 160, the third electric machine 170, the fourth electric machine 182, and/or the fifth electric machine 188) to rotate the engine 102 and an amount of power required by the heater 123 to operate (e.g., to heat the exhaust gas). Accordingly, the second power threshold is greater than the first power threshold. In some embodiments, the power value is the regeneration power value. In other embodiments, the power value is an excess power value. Responsive to the power value being at or above the second power threshold (indicating that sufficient power is available for a modified engine braking process), the controller 140 may proceed to process 322. Responsive to the power value being below the second power threshold, the controller 140 may return to process 302. Additionally and/or alternatively, responsive to the power value being below the second predetermined power threshold, the controller 140 may implement a normal engine braking process.

At process 322, the controller 140 causes an electric machine (e.g., the first electric machine 160, the third electric machine 170, or the fifth electric machine 188) to rotate the engine 102. For example, the controller 140 may implement a modified engine braking process. Advantageously, rotating the engine 102 using the electric machine (e.g., the first electric machine 160, the third electric machine 170, or the fifth electric machine 188) using the regenerative braking power and/or the excess power allows the controller 140 to control the flow of air through the engine 102 to the aftertreatment system 120. By way of example, the controller 140 may increase the flow of air through the engine 102 to the aftertreatment system 120 to increase a braking power of the engine 102 during the modified engine braking process.

Additionally, at process 322, the controller 140 activates or increases a heat output of the heater 123. Advantageously, activating or increasing the heat output of the heater 123 (e.g., using the regenerative braking power and/or the excess power) allows the controller 140 to control the flow of air through the engine 102 to the aftertreatment system 120. By way of example, the controller 140 may increase the flow of air through the engine 102 to the aftertreatment system 120 to increase a braking power of the engine 102 during the modified engine braking process.

In some embodiments, the method 300 optionally includes process 330 and process 332. By way of example, process 330 may be performed sequentially after process 318 and/or process 322. By way of another example, process 330 may be performed concurrently or partially concurrently with process 316, process 318, process 320, and/or process 332.

At process 330, the controller 140 compares the ammonia storage value to a predetermined ammonia storage threshold. The ammonia storage threshold corresponds to a minimum desired amount of ammonia stored by the aftertreatment system 120, or, more specifically, by a component thereof, such as a catalyst member. When the ammonia storage value is below the ammonia storage threshold, the amount of ammonia stored by the catalyst member is below the minimum desired amount, which can lead to decreased catalytic activity. Responsive to the ammonia storage value being at or above the ammonia storage threshold (indicating that a desired amount of ammonia is present in the aftertreatment system 120), the controller 140 may return to process 302. Responsive to the ammonia storage value being below the ammonia storage threshold (indicating that the amount of ammonia present in the aftertreatment system 120 is less than a desired amount), the controller 140 proceeds to process 332. At process 332, the controller 140 causes the reductant delivery system 124 to inject reductant into the aftertreatment system 120.

As utilized herein, the terms "approximately," "about," "substantially," and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the disclosure as recited in the appended claims.

It should be noted that the term "exemplary" and variations thereof, as used herein to describe various embodiments, are intended to indicate that such embodiments are possible examples, representations, or illustrations of possible embodiments (and such terms are not intended to connote that such embodiments are necessarily extraordinary or superlative examples).

The term "coupled" and variations thereof, as used herein, means the joining of two members directly or indirectly to one another. Such joining may be stationary (e.g., permanent or fixed) or moveable (e.g., removable or releasable). Such joining may be achieved with the two members coupled directly to each other, with the two members coupled to each other using one or more separate intervening members, or with the two members coupled to each other using an intervening member that is integrally formed as a single unitary body with one of the two members. If "coupled" or variations thereof are modified by an additional term (e.g., directly coupled), the generic definition of "coupled" provided above is modified by the plain language meaning of the additional term (e.g., "directly coupled" means the joining of two members without any separate intervening member), resulting in a narrower definition than the generic definition of "coupled" provided above. Such coupling may be mechanical, electrical, or fluidic. For example, circuit A communicably "coupled" to circuit B may signify that the circuit A communicates directly with circuit B (i.e., no intermediary) or communicates indirectly with circuit B (e.g., through one or more intermediaries).

References herein to the positions of elements (e.g., "top," "bottom," "above," "below") are merely used to describe the orientation of various elements in the FIGURES. It should be noted that the orientation of various elements may differ according to other exemplary embodiments, and that such variations are intended to be encompassed by the present disclosure.

While various circuits with particular functionality are shown in FIG. 4, it should be understood that the controller 140 may include any number of circuits for completing the functions described herein. For example, the activities and functionalities of the braking control circuit 212 may be combined in multiple circuits or as a single circuit. Additional circuits with additional functionality may also be included. Further, the controller 140 may further control other activity beyond the scope of the present disclosure.

As mentioned above and in one configuration, the "circuits" may be implemented in machine-readable medium for execution by one or more of various types of processors, such as the processor 204 of FIG. 4. Executable code may, for instance, comprise one or more physical or logical blocks of computer instructions, which may, for instance, be organized as an object, procedure, or function. Nevertheless, the executables need not be physically located together, but may comprise disparate instructions stored in different locations which, when joined logically together, comprise the circuit and achieve the stated purpose for the circuit. Indeed, a circuit of computer readable program code may be a single instruction, or many instructions, and may even be distributed over several different code segments, among different programs, and across several memory devices. Similarly, operational data may be identified and illustrated herein within circuits, and may be embodied in any suitable form and organized within any suitable type of data structure. The operational data may be collected as a single data set, or may be distributed over different locations including over different storage devices, and may exist, at least partially, merely as electronic signals on a system or network.

While the term "processor" is briefly defined above, the term "processor" and "processing circuit" are meant to be broadly interpreted. In this regard and as mentioned above, the "processor" may be implemented as one or more processors, application specific integrated circuits (ASICs), field programmable gate arrays (FPGAs), digital signal processors (DSPs), or other suitable electronic data processing components structured to execute instructions provided by memory. The one or more processors may take the form of a single core processor, multi-core processor (e.g., a dual core processor, triple core processor, quad core processor, etc.), microprocessor, etc. In some embodiments, the one or more processors may be external to the apparatus, for example the one or more processors may be a remote processor (e.g., a cloud based processor). Alternatively or additionally, the one or more processors may be internal and/or local to the apparatus. In this regard, a given circuit or components thereof may be disposed locally (e.g., as part of a local server, a local computing system, etc.) or remotely (e.g., as part of a remote server such as a cloud based server). To that end, a "circuit" as described herein may include components that are distributed across one or more locations.

Embodiments within the scope of the present disclosure include program products comprising computer or machine-readable media for carrying or having computer or machine-executable instructions or data structures stored thereon. Such machine-readable media can be any available media that can be accessed by a computer. The computer readable medium may be a tangible computer readable storage medium storing the computer readable program code. The computer readable storage medium may be, for example, but not limited to, an electronic, magnetic, optical, electromagnetic, infrared, holographic, micromechanical, or semiconductor system, apparatus, or device, or any suitable combination of the foregoing. More specific examples of the computer readable medium may include but are not limited to a portable computer diskette, a hard disk, a random access memory (RAM), a read-only memory (ROM), an erasable programmable read-only memory (EPROM or Flash memory), a portable compact disc read-only memory (CD-ROM), a digital versatile disc (DVD), an optical storage device, a magnetic storage device, a holographic storage medium, a micromechanical storage device, or any suitable combination of the foregoing. In the context of this document, a computer readable storage medium may be any tangible medium that can contain, and/or store computer readable program code for use by and/or in connection with an instruction execution system, apparatus, or device. Machine-executable instructions include, for example, instructions and data which cause a computer or processing machine to perform a certain function or group of functions.

The computer readable medium may also be a computer readable signal medium. A computer readable signal medium may include a propagated data signal with computer readable program code embodied therein, for example, in baseband or as part of a carrier wave. Such a propagated signal may take any of a variety of forms, including, but not limited to, electrical, electro-magnetic, magnetic, optical, or any suitable combination thereof. A computer readable signal medium may be any computer readable medium that is not a computer readable storage medium and that can communicate, propagate, or transport computer readable program code for use by or in connection with an instruction execution system, apparatus, or device. Computer readable program code embodied on a computer readable signal medium may be transmitted using any appropriate medium, including but not limited to wireless, wireline, optical fiber cable, Radio Frequency (RF), or the like, or any suitable combination of the foregoing.

In one embodiment, the computer readable medium may comprise a combination of one or more computer readable storage mediums and one or more computer readable signal mediums. For example, computer readable program code may be both propagated as an electro-magnetic signal through a fiber optic cable for execution by a processor and stored on RAM storage device for execution by the processor.

Computer readable program code for carrying out operations for aspects of the present disclosure may be written in any combination of one or more other programming languages, including an object oriented programming language such as Java, Smalltalk, C++ or the like and conventional procedural programming languages, such as the "C" programming language or similar programming languages. The computer readable program code may execute entirely on the user's computer, partly on the user's computer, as a stand-alone computer-readable package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The program code may also be stored in a computer readable medium that can direct a computer, other programmable data processing apparatus, or other devices to function in a particular manner, such that the instructions stored in the computer readable medium produce an article of manufacture including instructions which implement the function/act specified in the schematic flowchart diagrams and/or schematic block diagrams block or blocks.

Although the figures and description may illustrate a specific order of method steps, the order of such steps may differ from what is depicted and described, unless specified differently above. Also, two or more steps may be performed concurrently or with partial concurrence, unless specified differently above. Such variation may depend, for example, on the software and hardware systems chosen and on designer choice. All such variations are within the scope of the disclosure. Likewise, software implementations of the described methods could be accomplished with standard programming techniques with rule-based logic and other logic to accomplish the various connection steps, processing steps, comparison steps, and decision steps.

It is important to note that the construction and arrangement of the apparatus and system as shown in the various exemplary embodiments is illustrative only. Additionally, any element disclosed in one embodiment may be incorporated or utilized with any other embodiment disclosed herein.

## Claims

1. A method comprising:
receiving, a temperature value regarding an aftertreatment system;
receiving a regeneration power value regarding a braking event;
comparing the temperature value to a temperature threshold;
responsive to the temperature value being above the temperature threshold and the regeneration power value being at or above a first power threshold, causing, one or more electric machines to rotate an engine during the braking event; and
responsive to the temperature value being below the temperature threshold and the regeneration power value being at or above a second power threshold:
causing the one or more electric machines to rotate the engine, and
activating a heater associated with the aftertreatment system to heat the aftertreatment system during the braking event.

2. The method of claim 1, further comprising
comparing the regeneration power value to a regeneration power threshold corresponding to an amount of electrical power required by one or more predefined electrical sub-systems,
wherein the regeneration power value is at or above the regeneration power threshold when the one or more electric machines produce more electrical power than the amount of electrical power required by the one or more predefined electrical sub-systems during the braking event, and
wherein the temperature value is compared to the temperature threshold responsive to the regeneration power value being at or above the regeneration power threshold.

3. The method of claim 9, further comprising:
receiving, lookahead data regarding one or more future engine operating conditions;
predicting, based on the lookahead data, that the braking event will occur or will likely occur within a predefined time period.

4. The method of claim 1, further comprising:
responsive to predicting that the braking event will occur or will likely occur within the predefined time period, causing an engine speed value of the engine to increase before the braking event.

5. The method of claim 1, further comprising:
receiving a braking power demand value regarding the braking event; and
causing, an engine speed value of the engine to decrease from a current value to a predetermined value based on the braking power demand value.

6. The method of claim 1, wherein the braking event includes an engine braking process.

7. The method of claim 1, further comprising:
receiving an ammonia storage value regarding a catalyst member of the aftertreatment system;
comparing the ammonia storage value to an ammonia storage threshold; and
responsive to the ammonia storage value being below the ammonia storage threshold, causing a reductant delivery system to inject reductant into the aftertreatment system.

8. A system comprising:
a controller communicably coupled to an engine, the controller comprising at least one processor coupled to at least one memory device storing instructions that, when executed by the at least one processor, cause the controller to perform the operations of any of claims 1 to 7.

9. The system of claim 8, wherein:
the engine is part of a series hybrid powertrain; and
the one or more electric machines include a first electric machine configured as an electric generator and a second electric machine configured as a motor.

10. The system of claim 8, wherein:
the engine is part of a series-parallel hybrid powertrain; and
the one or more electric machines include a first electric machine configured as an electric generator and a second electric machine configured as a motor.

11. A non-transitory computer-readable media storing instructions that, when executed by one or more processors of a controller, cause the one or more processors to perform the operations of any of claims 1 to 7.

12. The non-transitory computer-readable media of claim 11, wherein the instructions, when executed by the one or more processors, cause the one or more processors to perform further operations comprising:
operating a valve positioned downstream of the engine and upstream of the aftertreatment system to an open or partially open position responsive to the temperature value being below the temperature threshold.
